(19) Europäisches Patentamt
European Patent Office
Office européen des brevets

(11) EP 4 611 096 A1

(12) # EUROPEAN PATENT APPLICATION

(43) Date of publication:
**03.09.2025 Bulletin 2025/36**

(21) Application number: **25159959.3**

(22) Date of filing: **25.02.2025**

(51) International Patent Classification (IPC):
***H01M 10/0525*** *(2010.01)* ***H01M 10/0567*** *(2010.01)*
***H01M 10/0569*** *(2010.01)*

(52) Cooperative Patent Classification (CPC):
**H01M 10/0567; H01M 10/0525; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2024 KR 20240029033**

(71) Applicants:
- **SK On Co., Ltd.**
  **Seoul 03161 (KR)**
- **SK Innovation Co., Ltd.**
  **Seoul 03188 (KR)**

(72) Inventors:
- **SHIM, Yu Na**
  **Daejeon 34124 (KR)**
- **KIM, Jeong Yun**
  **Daejeon 34124 (KR)**
- **KIM, Jong Chan**
  **Daejeon 34124 (KR)**
- **KIM, Chan Woo**
  **Daejeon 34124 (KR)**
- **LEE, Hong Won**
  **Daejeon 34124 (KR)**

(74) Representative: **Prüfer & Partner mbB**
**Patentanwälte · Rechtsanwälte**
**Sohnckestraße 12**
**81479 München (DE)**

(54) **ELECTROLYTE FOR LITHIUM SECONDARY BATTERY AND LITHIUM SECONDARY BATTERY INCLUDING THE SAME**

(57) An electrolyte for a lithium secondary battery according to exemplary embodiments may include an additive including a compound having a specific structure, an organic solvent and a lithium salt. Accordingly, a lithium secondary battery including the electrolyte for a lithium secondary battery may have improved flame retardant characteristics and lifespan characteristics while suppressing a thickness increase in a high temperature environment.

[FIG. 1]

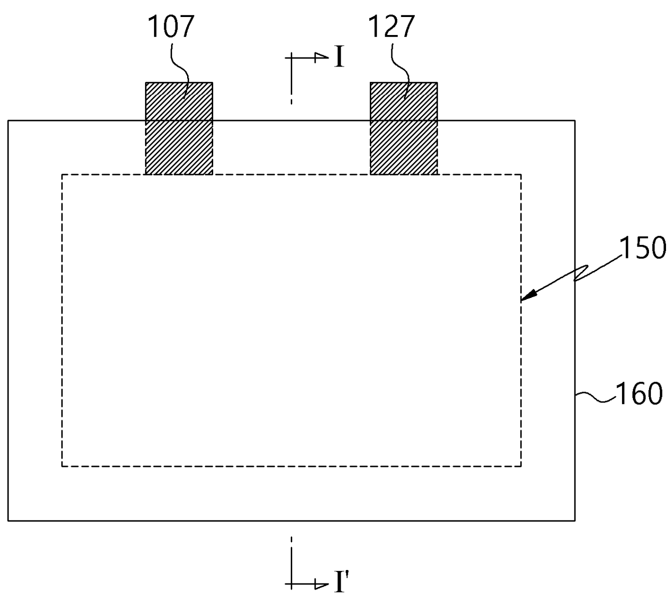


EP 4 611 096 A1

## Description

[BACKGROUND OF THE INVENTION]

1. Field of the Invention

The present disclosure relates to an electrolyte for a lithium secondary battery and a lithium secondary battery including the same, and more specifically, to an electrolyte for a lithium secondary battery which includes a solvent and an electrolyte salt and a lithium secondary battery including the electrolyte.

2. Description of the Related Art

A secondary battery is a battery which can be repeatedly charged and discharged, and has been widely applied to portable electronic devices such as a mobile phone, a laptop computer, etc. as a power source thereof.

Among the secondary batteries, a lithium secondary battery has a high operating voltage and a high energy density per unit weight, and is advantageous in terms of a charging speed and light weight. In this regard, the lithium secondary battery has been actively developed and applied to various industrial fields.

The lithium secondary battery may include: for example, an electrode assembly including a cathode, an anode and a separation membrane interposed between the cathode and the anode; and an electrolyte in which the electrode assembly is impregnated.

The lithium secondary battery may further include, for example, a pouch-shaped outer case in which the electrode assembly and the electrolyte are housed.

The cathode of the lithium secondary battery may be prepared by, for example, coating a cathode current collector with a cathode slurry including a cathode active material, a binder, and if necessary, a conductive material, followed by drying and pressing the same.

The cathode active material may be a material capable reversibly intercalating and deintercalating lithium ions. For example, the cathode active material may be a lithium metal oxide including a metal element such as nickel (Ni), cobalt (Co), manganese (Mn) and the like.

Meanwhile, as subjects, to which the lithium secondary battery is applied, are expanded, excellent lifespan characteristics, high capacity and operational stability are required. Accordingly, it is necessary to develop a lithium secondary battery that provides uniform output and capacity even during repeated charging and discharging.

[SUMMARY OF THE INVENTION]

An object of the present disclosure is to provide an electrolyte for a lithium secondary battery having improved thermal and chemical stabilities.

Another object of the present disclosure is to provide a lithium secondary battery which includes the electrolyte and has improved lifespan characteristics and high-temperature storage characteristics.

The lithium secondary battery including the electrolyte of the present disclosure may be widely applied to green technology fields such as an electric vehicle, and a battery charging station, as well as other solar power generation and wind power generation using the batteries. In addition, the lithium secondary battery of the present disclosure may be used in an eco-friendly electric vehicle, and a hybrid vehicle, etc., which are intended to prevent climate change by suppressing air pollution and greenhouse gas emissions.

To achieve the above objects, an electrolyte for a lithium secondary battery according to exemplary embodiments may include: an additive which includes a compound having a structure represented by Formula 1 below; an organic solvent; and a lithium salt.

[Formula 1]

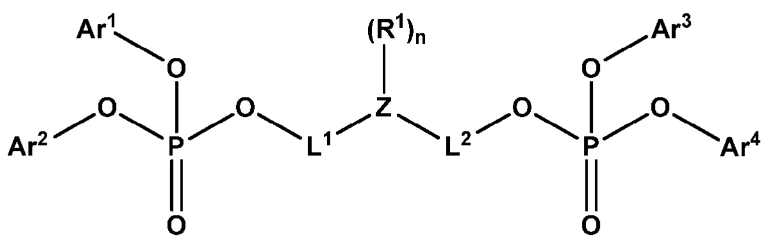

In Formula 1, $R^1$ may be

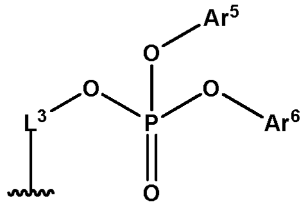

,

$Ar^1$ to $Ar^6$ may each independently be a $C_6$ to $C_{18}$ aryl group, a $C_7$ to $C_{19}$ alkylaryl group or a $C_6$ to $C_{18}$ haloaryl group,
$L^1$ to $L^3$ may each independently be a $C_1$ to $C_{12}$ alkylene group, a $C_3$ to $C_{12}$ cycloalkylene group, a $C_6$ to $C_{12}$ arylene group or a $C_3$ to $C_{12}$ heteroarylene group,
when Z is O (oxygen), n may be 0, when Z is N (nitrogen), n may be 1, and when Z is C (carbon), n may be 2.

In some embodiments, $Ar^1$ to $Ar^6$ may each independently be a $C_6$ to $C_{12}$ aryl group, a $C_7$ to $C_{13}$ alkylaryl group or a $C_6$ to $C_{12}$ haloaryl group, and $L^1$ to $L^3$ may each independently be a $C_1$ to $C_{12}$ alkylene group.
In some embodiments, $Ar^1$ to $Ar^6$ may be a phenyl group, and $L^1$ to $L^3$ may each independently be a $C_1$ to $C_5$ alkylene group.
In some embodiments, the compound having a structure represented by Formula 1 above may include compounds having structures represented Formulas 2-1 to 2-3 below:

[Formula 2-1]

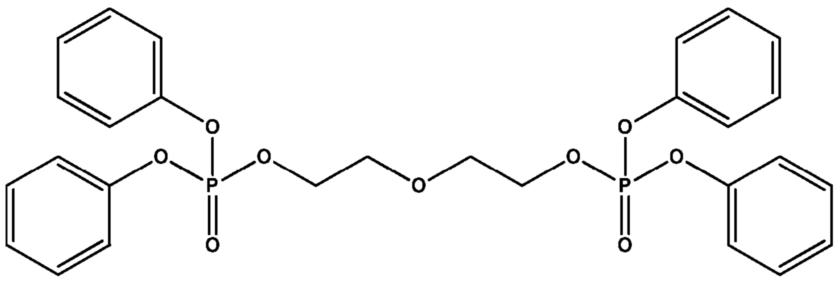

[Formula 2-2]

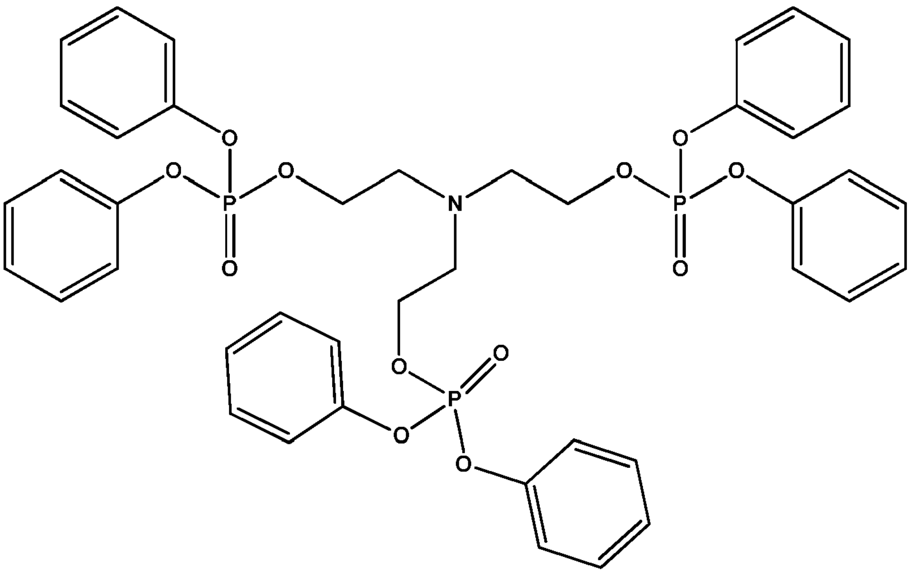

[Formula 2-3]

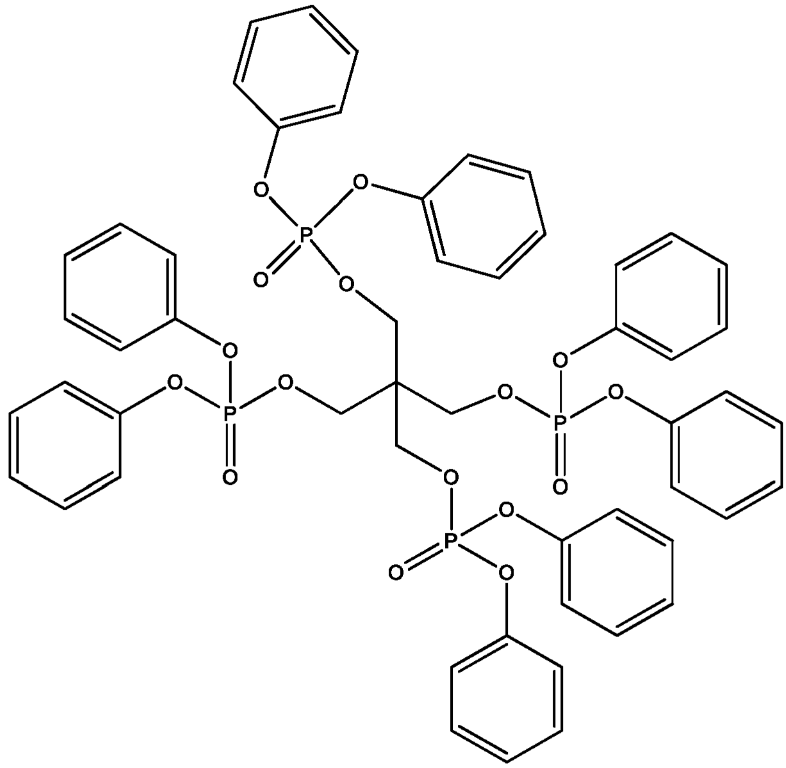

.

In some embodiments, the organic solvent may include at least one selected from the group consisting of a carbonate organic solvent, an ester organic solvent, an ether organic solvent, a ketone organic solvent and an aprotic organic solvent.

In some embodiments, the organic solvent may include a cyclic carbonate solvent and a linear carbonate solvent.

In some embodiments, a ratio of a volume of the cyclic carbonate solvent to a volume of the linear carbonate solvent in the organic solvent may be 1/9 to 1.

In some embodiments, a content of the additive may be 0.1% by weight to 10% by weight based on a total weight of the electrolyte.

In some embodiments, the electrolyte may further include at least one auxiliary additive selected from the group consisting of a fluorine-containing carbonate compound, a lithium phosphate compound, a sultone compound and a sulfate compound.

In some embodiments, a content of the auxiliary additive may be 0.01% by weight to 10% by weight based on the total weight of the electrolyte.

In some embodiments, a weight ratio of the content of the auxiliary additive to the content of the additive in the electrolyte may be 0.1 to 5.

In some embodiments, the fluorine-containing carbonate compound may include fluoroethylene carbonate, the lithium phosphate compound may include lithium difluoro phosphate, the sultone compound may include at least one selected from the group consisting of 1,3-propane sultone, 1,4-butane sultone, ethene sultone, 1,3-propene sultone, 1,4-butene sultone and 1-methyl-1,3-propene sultone, and the sulfate compound may include at least one selected from the group consisting of ethylene sulfate, trimethylene sulfate and methyltrimethylene sulfate.

A lithium secondary battery according to exemplary embodiments includes: a cathode; an anode disposed to face the cathode; and the above-described electrolyte for a lithium secondary battery, in which the cathode and the anode are impregnated.

When using the electrolyte for a lithium secondary battery according to exemplary embodiments, a swelling phenomenon caused during charging and discharging of the lithium secondary battery may be effectively prevented, and an amount of heat generated by the electrolyte may be reduced.

The lithium secondary battery according to exemplary embodiments may include the electrolyte for a lithium secondary battery. Accordingly, the lithium secondary battery may have improved flame retardant characteristics and lifespan characteristics while suppressing a thickness increase in a high temperature environment.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a plan view schematically illustrating a lithium secondary battery according to exemplary embodiments; and
FIG. 2 is a cross-sectional view schematically illustrating the lithium secondary battery according to exemplary embodiments.

[DETAILED DESCRIPTION OF THE INVENTION]

An electrolyte for a lithium secondary battery according to exemplary embodiments may include an additive including a compound having a specific structure, an organic solvent and a lithium salt.
In addition, a lithium secondary battery according to exemplary embodiments includes a cathode, an anode disposed to face the cathode, and the electrolyte for a lithium secondary battery, in which the cathode and the anode are impregnated.
Accordingly, the flame retardant characteristics and lifespan characteristics of the lithium secondary battery may be improved.
As used herein, the "A compound" may refer to a compound including an A functional group and a derivative thereof.
As used herein, the "$C_a$ to $C_b$" may refer to "the number of carbon (C) atoms of a to b."
In this specification, "heterocycloalkyl" or "heteroarylene" may refer to a cycloalkyl or arylene in which at least one carbon is each independently substituted with -O-, -S- or -NH-.
Hereinafter, embodiments of the present disclosure will be described in more detail with reference to specific implementation examples and drawings. However, the embodiments are merely illustrative and the present disclosure is not limited to the specific embodiments described by way of example.

**<Electrolyte for a lithium secondary battery>**

The electrolyte for a lithium secondary battery (hereinafter, may be abbreviated as an electrolyte) according to exemplary embodiments may include an additive including a compound having a structure represented by Formula 1 below, an organic solvent and a lithium salt.
Hereinafter, components of the present disclosure will be described in more detail.

**Additive**

The electrolyte for a lithium secondary battery according to exemplary embodiments may include an additive including a compound having a structure represented by Formula 1 below.

[Formula 1]

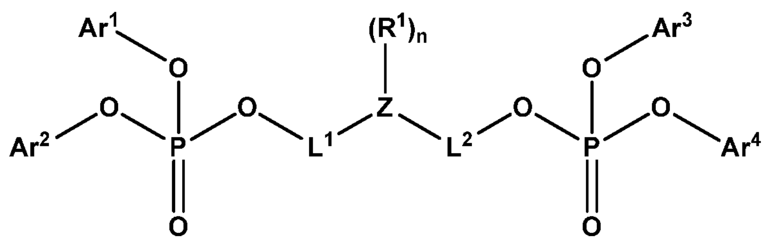

In Formula 1, $R^1$ may be

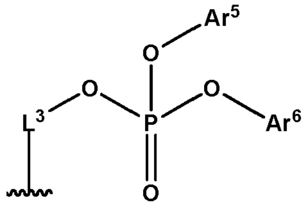

,

$Ar^1$ to $Ar^6$ may each independently be a $C_6$ to $C_{18}$ aryl group, a $C_7$ to $C_{19}$ alkylaryl group or a $C_6$ to $C_{18}$ haloaryl group, $L_1$ to $L_3$ may each independently be a $C_1$ to $C_{12}$ alkylene group, a $C_3$ to $C_{12}$ cycloalkylene group, a $C_6$ to $C_{12}$ arylene group or a $C_3$ to $C_{12}$ heteroarylene group,

when Z is O (oxygen), n may be 0, when Z is N (nitrogen), n is 1, and when Z may be C (carbon), n may be 2.

For example, $Ar^1$ to $Ar^6$ may each independently be a $C_6$ to $C_{12}$ aryl group, a $C_6$ to $C_8$ aryl group or a phenyl group.

For example, $Ar^1$ to $Ar^6$ may each independently be a $C_7$ to $C_{13}$ alkylaryl group, a $C_7$ to $C_{10}$ alkylaryl group or a $C_7$ to $C_8$ alkylaryl group.

For example, $Ar^1$ to $Ar^6$ may each independently be a $C_6$ to $C_{13}$ aryl group in which at least one hydrogen atom is substituted with a $C_1$ to $C_5$ alkyl group, a $C_6$ to $C_9$ aryl group in which at least one hydrogen atom is substituted with a $C_1$ to $C_4$ alkyl group or a $C_6$ to $C_7$ aryl group in which at least one hydrogen atom is substituted with a $C_1$ to $C_3$ alkyl group.

For example, $Ar^1$ to $Ar^6$ may each independently be a $C_6$ to $C_{12}$ haloaryl group, a $C_6$ to $C_8$ haloaryl group or a halophenyl group.

For example, $Ar^1$ to $Ar^6$ may each independently be a $C_6$ to $C_{12}$ aryl group in which at least one hydrogen atom is substituted with a halogen atom, a $C_6$ to $C_8$ aryl group in which at least one hydrogen atom is substituted with a halogen atom, or a phenyl group in which at least one hydrogen atom is substituted with a halogen atom. Here, the halogen atom may be a fluorine atom, a chlorine atom, a bromine atom or an iodine atom.

For example, $L^1$ to $L^3$ may each independently be a $C_1$ to $C_8$ alkylene group, a $C_3$ to $C_8$ cycloalkylene group, a $C_6$ to $C_8$ arylene group or a $C_3$ to $C_8$ heteroarylene group.

For example, in $L^1$ to $L^3$, the hydrogen atom included in the aryl group, the alkylene group, the cycloalkylene group, the arylene group or the heteroarylene group may be substituted or not substituted. For example, the hydrogen atom may be substituted with at least one substituent of a halogen group, a $C_1$ to $C_6$ alkyl group, a $C_2$ to $C_6$ alkenyl group, an amino group, a $C_1$ to $C_6$ alkoxy group, a $C_3$ to $C_7$ cycloalkyl group and a 5- to 7-membered heterocycloalkyl group. The number of substituents may be 1, or 2 or more.

The halogen group may be a fluoro group (-F), a chloro group (-Cl), a bromo group (-Br) or an iodo group (-I).

In some embodiments, $Ar^1$ to $Ar^6$ may each independently be a $C_6$ to $C_{12}$ aryl group, a $C_7$ to $C_{13}$ alkylaryl group or a $C_6$ to $C_{12}$ haloaryl group, and $L^1$ to $L^3$ may each independently be a $C_1$ to $C_{12}$ alkylene group. In one embodiment, $Ar^1$ to $Ar^6$ may be a phenyl group, and $L^1$ to $L^3$ may each independently be a $C_1$ to $C_5$ alkylene group.

For example, when Z is C (carbon), n may be 2, wherein a plurality of $R^1$s may be the same as or different from each other.

In some embodiments, the compound having a structure represented by Formula 1 above may include compounds having structures represented by Formulas 2-1 to 2-3 below.

[Formula 2-1]

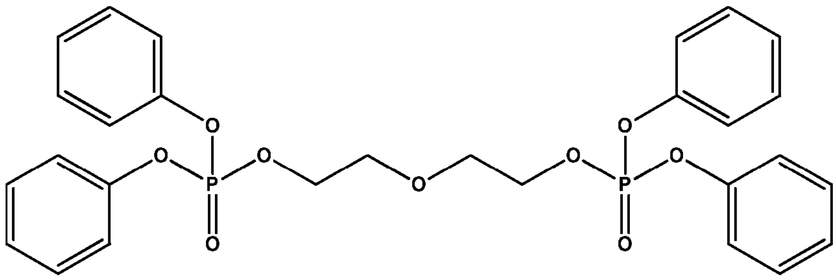

[Formula 2-2]

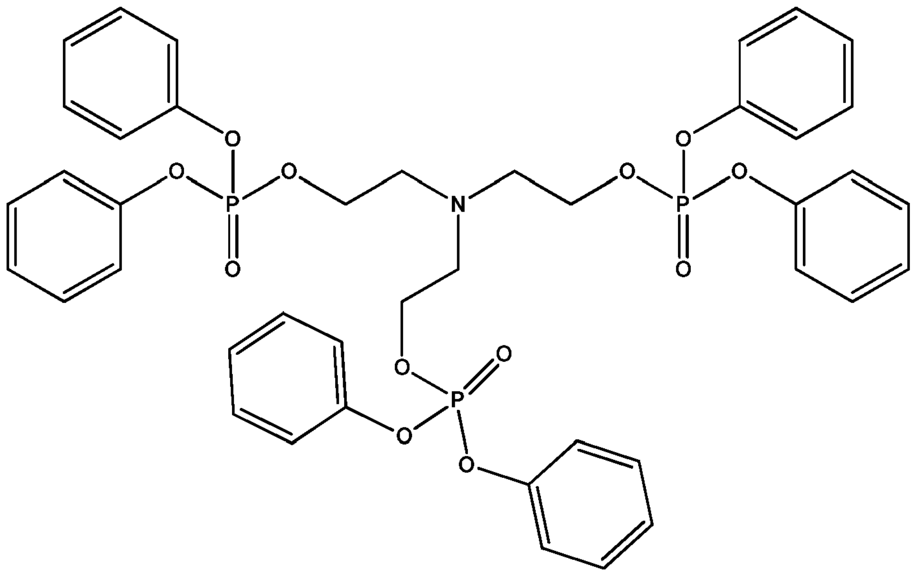

[Formula 2-3]

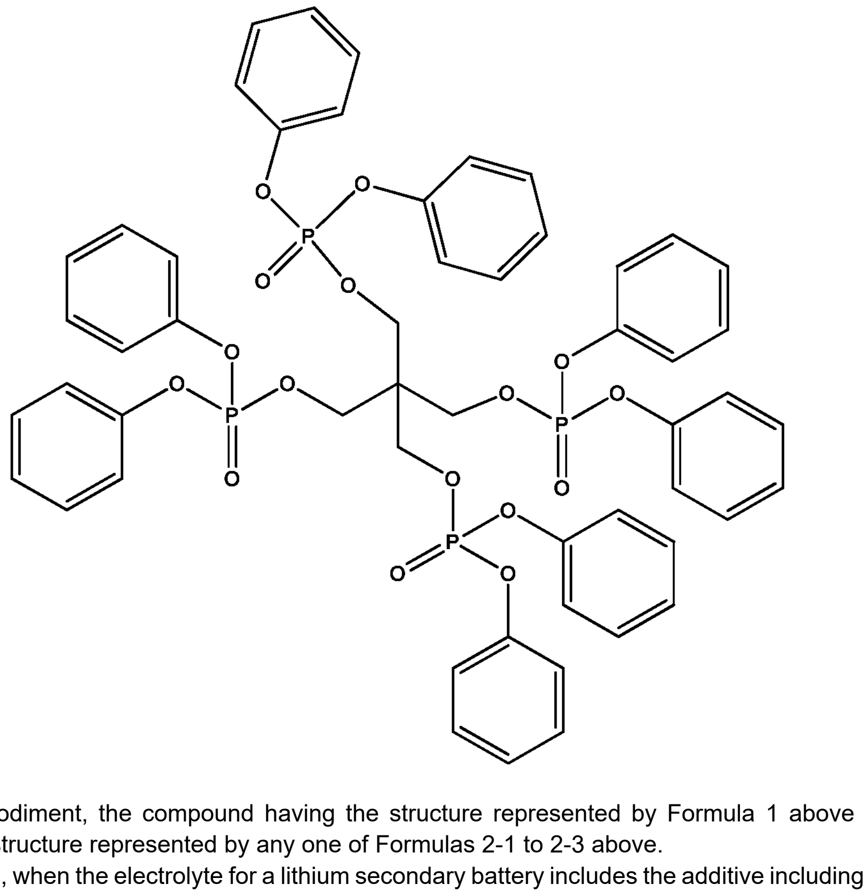

In one embodiment, the compound having the structure represented by Formula 1 above may include a compound having a structure represented by any one of Formulas 2-1 to 2-3 above.

For example, when the electrolyte for a lithium secondary battery includes the additive including the compound having the structure represented by Formula 1 above, the surface of an electrode may be stably protected, thereby stabilizing an electrode interface to suppress a side reaction with the electrolyte. Accordingly, the lithium secondary battery may suppress a thickness increase in a high temperature environment, and improve the capacity retention rate, flame retardant characteristics and lifespan characteristics.

In some embodiments, a content of the additive may be 0.1% by weight ("wt%") to 10 wt% based on a total weight of the electrolyte.

For example, the content of the additive may be 0.2 wt% to 9 wt%, 0.3 wt% to 8 wt%, 0.4 wt% to 7 wt%, 0.5 wt% to 6.5 wt%, or 1 wt% to 6 wt% based on the total weight of the electrolyte. Within the above range, sufficient passivation and formation of a stable solid electrolyte interphase (SEI) film may be implemented, as well as, the movement of lithium ions and the activity of a cathode active material may not be inhibited.

## Auxiliary additive

The electrolyte for a lithium secondary battery according to exemplary embodiments may further include at least one auxiliary additive selected from the group consisting of a fluorine-containing carbonate compound, a lithium phosphate compound, a sultone compound and a sulfate compound. When the additive and the auxiliary additive are used in combination, a lithium secondary battery having more improved high-temperature storage characteristics may be efficiently implemented.

For example, the fluorine-containing carbonate compound may include a fluorine atom bonded to at least one carbon atom of the carbonate compound or a substituent to which the fluorine atom is bonded through substitution (for example, a fluorine-substituted alkyl group such as $-CF_3$).

In some embodiments, the fluorine-containing carbonate compound may include a fluorine-containing cyclic carbonate compound having a cyclic structure. For example, the fluorine-containing cyclic carbonate compound may have a 5- to 7-membered cyclic structure.

For example, the fluorine-containing cyclic carbonate compound may include fluoroethylene carbonate (FEC).

In some embodiments, the lithium phosphate compound may include a fluorine-containing lithium phosphate compound.

For example, the fluorine-containing lithium phosphate compound may include a fluorine atom bonded to a phosphorus atom of the lithium phosphate compound or a substituent to which the fluorine atom is bonded through substitution (for example, a fluorine-substituted alkyl group such as $CF_3$).

In some embodiments, the fluorine-containing lithium phosphate compound may include at least one selected from the group consisting of lithium difluoro phosphate ($LiPO_2F_2$) and lithium difluoro(bis-oxalato) phosphate. For example, the fluorine-containing lithium phosphate compound may include lithium difluoro phosphate ($LiPO_2F_2$).

In some embodiments, the sultone compound may include at least one selected from the group consisting of an alkyl sultone compound and an alkenyl sultone compound.

In some embodiments, the sultone compound may include both the alkyl sultone compound and the alkenyl sultone compound.

For example, the alkyl sultone compound may include at least one selected from the group consisting of 1,3-propane sultone (PS) and 1,4-butene sultone.

For example, the alkenyl sultone compound may include at least one selected from the group consisting of ethene sultone, 1,3-propene sultone (PRS), 1,4-butene sultone, and 1-methyl-1,3-propene sultone.

In some embodiments, the sulfate compound may include a cyclic sulfate compound having a cyclic structure. The cyclic sulfate compound may have a 5- to 7-membered cyclic structure.

For example, the cyclic sulfate compound may include at least one selected from the group consisting of 1,2-ethylene sulfate (ESA), trimethylene sulfate (TMS) and methyltrimethylene sulfate (MTMS).

In one embodiment, a content of the auxiliary additive may be 0.01 wt% to 10 wt% based on the total weight of the electrolyte.

For example, the content of the auxiliary additive may be 0.05 wt% to 9 wt%, 0.5 wt% to 8 wt%, 0.8 wt% to 7 wt%, 1.0 wt% to 6 wt%, or 1.5 wt% to 5 wt% based on the total weight of the electrolyte. Within the above range, durability of the SEI may be enhanced, and flame retardant performance of the electrolyte may be further improved without inhibiting the role of the additive.

In some embodiments, a weight ratio of the content of the auxiliary additive to the content of the additive in the electrolyte may be 0.1 to 5.

For example, the ratio may be 0.2 to 4.8, 0.3 to 4.5, 0.4 to 4.0, 0.5 to 3.5, or 0.7 to 3. Within the above range, the high-temperature storage characteristics and flame retardant characteristics of the lithium secondary battery may be further improved.

In one embodiment, as the auxiliary additive, the fluorine-containing carbonate compound, the lithium phosphate compound, the sultone compound and the sulfate compound may be used together.

In one embodiment, as the auxiliary additive, the fluorine-containing carbonate compound and the sultone compound may be used together. For example, the electrolyte may include fluoroethylene carbonate, 1,3-propene sultone, and 1,3-propane sultone as the auxiliary additive.

In some embodiments, the auxiliary additive may further include at least one selected from the group consisting of a borate compound, a nitrile compound, an amine compound, a silane compound and a benzene compound.

For example, the borate compound may include at least one selected from the group consisting of lithium

tetraphenyl borate and lithium difluoro(oxalato)borate (LiODFB).

For example, the nitrile compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

For example, the amine compound may include at least one selected from the group consisting of triethanolamine and ethylene diamine fluorophenylacetonitrile.

For example, the silane compound may include tetravinyl silane, etc.

For example, the benzene compound may include at least one selected from the group consisting of monofluorobenzene, difluorobenzene, trifluorobenzene and tetrafluorobenzene.

## Organic solvent and lithium salt

For example, the organic solvent may include an organic compound which provides sufficient solubility to the lithium salt, the additive and the auxiliary additive, and does not have reactivity within the lithium secondary battery.

In some embodiments, the organic solvent may include at least one selected from the group consisting of a carbonate organic solvent, an ester organic solvent, an ether organic solvent, a ketone organic solvent and an aprotic organic solvent.

In some embodiments, the organic solvent may include a carbonate solvent, and the carbonate solvent may include a linear carbonate solvent and a cyclic carbonate solvent.

For example, the linear carbonate solvent may include dimethyl carbonate (DMC), ethyl methyl carbonate (EMC), diethyl carbonate (DEC), methyl propyl carbonate, ethyl propyl carbonate, dipropyl carbonate and the like.

For example, the cyclic carbonate solvent may include ethylene carbonate (EC), propylene carbonate (PC), butylene carbonate and the like.

In some embodiments, the organic solvent may include the linear carbonate solvent more than the cyclic carbonate solvent based on a volume.

In some embodiments, a ratio of a volume of the cyclic carbonate solvent to a volume of the linear carbonate solvent in the organic solvent may be 1/9 to 1. For example, the ratio may be 1/9 to 1, 1/9 to 2/3, 1/6 to 2/3, or 1/4 to 2/3. Within the above range, the high-temperature storage characteristics of the lithium secondary battery may be further improved.

For example, the ester solvent may include at least one of methyl acetate (MA), ethyl acetate (EA), n-propyl acetate (n-PA), 1,1-dimethylethyl acetate (DMEA), methyl propionate (MP), ethyl propionate (EP), $\gamma$-butyrolactone (GBL), decanolide, valerolactone, mevalonolactone and caprolactone.

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone solvent may include cyclohexanone, etc.

For example, the alcohol solvent may include at least one of ethyl alcohol and isopropyl alcohol.

For example, the aprotic solvent may include at least one of a nitrile solvent, an amide solvent (e.g., dimethylformamide), a dioxolane solvent (e.g., 1,3-dioxolane), and a sulfolane solvent.

In some embodiments, the electrolyte may include a lithium salt.

For example, the lithium salt may be represented as $Li^+X^-$.

For example, the anion ($X^-$) of the lithium salt may be at least one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In some embodiments, the lithium salt may include at least one selected from the group consisting of $LiBF_4$ and $LiPF_6$.

In some embodiments, the lithium salt may be included in a concentration of 0.01 M to 5 M, 0.01 M to 4 M, 0.5 M to 3 M, or 0.5 M to 2 M based on the organic solvent. Within the above concentration range, lithium ions and/or electrons may move smoothly during charging and discharging of the lithium secondary battery.

**<Lithium secondary battery>**

FIGS. 1 and 2 are a schematic plan view and a cross-sectional view illustrating a lithium secondary battery according to exemplary embodiments, respectively. For example, FIG. 2 is a cross-sectional view taken on line I-I' in FIG. 1.

Referring to FIGS. 1 and 2, the lithium secondary battery may include an electrode assembly 150 including a

cathode 100, an anode 130 and a separation membrane 140 interposed between the cathode and the anode. The electrode assembly 150 may be housed in a case 160 together with the electrolyte according to the above-described exemplary embodiments to be impregnated therein.

The cathode 100 may include a cathode current collector 105 and a cathode active material layer 110 on the cathode current collector 105.

For example, the cathode active material layer 110 includes a cathode active material and a binder, and may further include a conductive material.

For example, the cathode 100 may be prepared by mixing and stirring the cathode active material, a cathode binder, the conductive material, and a dispersant etc. in a solvent to prepare a cathode slurry, and then applying it to the cathode current collector 105, followed by drying and pressing the same.

For example, the cathode current collector 105 may include stainless steel, nickel, aluminum, titanium, copper, or an alloy thereof, and more preferably, includes aluminum or an aluminum alloy. The cathode current collector may have a thickness of, for example, 10 μm to 50 μm, but it is not limited thereto.

For example, the cathode active material may include a material capable of reversibly intercalating and deintercalating lithium ions.

For example, the cathode active material may include a lithium metal oxide including a metal element such as nickel, cobalt, manganese, aluminum and the like.

For example, the lithium metal oxide may be represented by Formula 3 below.

[Formula 3] $Li_xNi_aCo_bM_cO_y$

In Formula 3 above, M is at least one of Al, Zr, Ti, Cr, B, M g, Mn, Ba, Si, Y, W and Sr, and x, y, a, c and b may satisfy $0.9 \le x \le 1.2$, $1.9 \le y \le 2.1$, $0.5 \le a \le 1$, $0 \le c/(a+b) \le 0.13$.

For example, in Formula 3 above, c may be in a range of $0 \le c \le 0.11$.

In some embodiments, in the lithium metal oxide, a content of nickel among elements except for lithium and oxygen may be 60 mol% or more, 70 mol% or more, 80 mol% or more, 83 mol% or more, or 85 mol% or more.

For example, in Formula 3 above, a may be in a range of $0.6 \le a \le 1$ or $0.8 \le a \le 1$.

In some embodiments, the lithium metal oxide may further include a coating element or a doping element. For example, the coating element or the doping element may include Al, Ti, Ba, Zr, Si, B, Mg, P, Sr, W, La, or an alloy thereof, or an oxide thereof. These may be used alone or in combination of two or more thereof. The lithium metal oxide may be passivated by the coating element or the doping element, thereby stability and lifespan against penetration of an external object may be further improved.

For example, when the content of nickel in the lithium metal oxide is increased, chemical stability (e.g., high-temperature storage characteristics) may be relatively deteriorated. However, in the case of the lithium secondary battery according to the exemplary embodiments, by including the above-described electrolyte, even when including a high-nickel lithium metal oxide (containing 80 mol% or more of nickel), it is possible to provide improved high-temperature storage characteristics.

For example, the cathode binder may include: an organic binder such as polyvinylidene fluoride (PVDF), vinylidene fluoride-hexafluoropropylene copolymer (PVDF-co-HFP), polyacrylonitrile, polymethyl methacrylate, etc.; an aqueous binder such as styrene-butadiene rubber (SBR), etc. In addition, the cathode binder may be used together with a thickener such as carboxymethyl cellulose (CMC).

For example, the conductive material may include a carbon-based conductive material such as graphite, carbon black, graphene, carbon nanotubes, etc.; a metal-based conductive material such as tin, tin oxide, titanium oxide, or a perovskite material such as $LaSrCoO_3$, $LaSrMnO_3$, etc.

The anode 130 may include an anode current collector 125 and an anode active material layer 120 on the anode current collector 125.

For example, the anode active material layer 120 includes an anode active material and an anode binder, and may further include a conductive material.

For example, the anode 130 may be prepared by mixing and stirring the anode active material, the anode binder, the conductive material, etc. in a solvent to prepare an anode slurry, and then coating the anode current collector 125 with the anode slurry, followed by drying and pressing the same.

For example, the anode current collector 125 may include gold, stainless steel, nickel, aluminum, titanium, copper or an alloy thereof, and more preferably, includes copper or a copper alloy. The anode current collector may have a thickness of, for example, 10 μm to 50 μm, but it is not limited thereto.

The anode active material may be a material capable of intercalating and deintercalating lithium ions. The anode active material may include, for example, a carbon-based material such as crystalline carbon, amorphous carbon, carbon composite, or carbon fiber, etc.; a silicone-based material; a lithium alloy and the like.

The amorphous carbon may be, for example, hard carbon, cokes, mesocarbon microbead (MCMB) calcined at

1500°C or lower, mesophase pitch-based carbon fiber (MPCF) or the like. The crystalline carbon may be, for example, natural graphite, artificial graphite, graphite cokes, graphite MCMB, graphite MPCF or the like.

The silicon material may include, for example, Si, $SiO_x$ ($0<x<2$), Si/C, SiO/C, Si-metal or the like.

The lithium alloy may include, for example, elements such as aluminum, zinc, bismuth, cadmium, antimony, silicon, lead, tin, gallium, indium or the like.

The anode binder and the conductive material may be substantially the same as or similar to the above-described cathode binder and the conductive material. The anode binder may be, for example, an aqueous binder such as styrene-butadiene rubber (SBR) for consistency with the carbon-based active material, and may be used together with a thickener such as carboxymethyl cellulose (CMC).

In one embodiment, the separation membrane 140 may be interposed between the cathode 100 and the anode 130. In some embodiments, the anode 130 may have an area (e.g., a contact area with the separation membrane 140) larger than that of the cathode 100. Thereby, lithium ions generated from the cathode 100 may smoothly move to the anode 130 without being precipitated in the middle. According to embodiments, the separation membrane may have a thickness of 10 μm to 20 μm, but in the present disclosure, it is not limited thereto.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer.

For example, the separation membrane 140 may include a nonwoven fabric made of glass fiber having a high melting point, polyethylene terephthalate fiber or the like.

For example, an electrode cell may be formed by including the cathode 100, the anode 130 and the separation membrane 140. In addition, a plurality of electrode cells may be laminated to form an electrode assembly 150. For example, the electrode assembly 150 may be formed by winding, lamination, z-folding or stack-folding of the separation membrane 140.

The electrode assembly 150 and the above-described electrolyte for a lithium secondary battery may be housed together in the case 160 to form a lithium secondary battery.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case to form electrode leads (a cathode lead 107 and an anode lead 127) extending or exposed to an outside of the case 160.

The lithium secondary battery may be manufactured, for example, in a cylindrical shape using a can, a square shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

**<Synthesis Example>**

**(1) Preparation of Additive I (oxybis(ethane-2,1-diyl)tetraphenyl bis(phosphate))**

100 mL of toluene, 17.83 g (66.37 mmol) of diphenyl chlorophosphate, and 7.36 g (72.69 mmol) of triethylamine were sequentially quantified and input into a round bottom flask. Thereafter, a reactor was cooled to 0°C, and 3.35 g (31.61 mmol) of diethylene glycol was slowly input into the mixture solution for 10 minutes, followed by stirring the mixture at room temperature for 21 hours.

After completion of the reaction, the mixture was washed with water three times to obtain an organic layer, and dried under reduced pressure to remove toluene. The concentrated solution was purified through a column with hexane and ethyl acetate to obtain 13.09 g of Additive I having a structure represented by Formula 2-1 below (yield: 72.6%).

1H-NMR chemical shift (600 MHz, Chloroform-d) analysis of Additive I, δ: 7.33-7.38 (m, 8H), 7.18-7.28 (m, 12H), 4.32-4.36 (t, 4H), 3.67-3.69 (t, 4H)

[Formula 2-1]

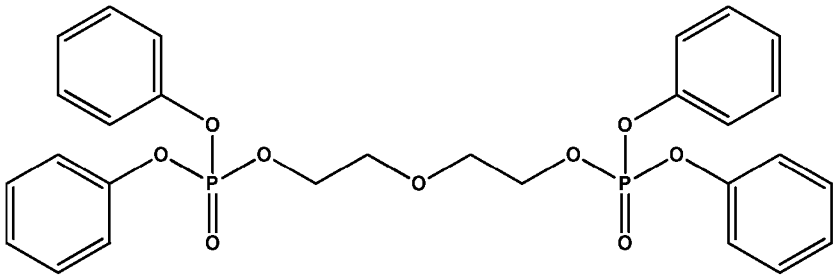

(Oxybis(ethane-2, 1-diyl)tetraphenyl bis(phosphate))

**(2) Preparation of Additive II (nitrilotris(ethane-2,1-diyl)hexaphenyl tris(phosphate))**

Tetrahydrofuran (120 mL), triethanolamine (2.0 g, 13.4 mmol), triethylamine (5.4 g, 56.6 mmol), and 4-dimethylaminopyridine (0.2 g, 2.0 mmol) were sequentially input into a round bottom flask, and then cooled to 0°C. Diphenylphosphoryl chloride (12.6 g, 46.9 mmol) was slowly added to the mixture solution for 0.5 h, then the temperature was increased to 60°C, followed by additionally stirring the mixture for 2 h.

After completion of the reaction, 100 mL of water was slowly added dropwise to the stirred solution, an organic layer was separated and washed three times with 50 mL of distilled water, then the solvent was dried and purified through a silica column to obtain 3.0 g of Additive II having a structure represented by Formula 2-2 below (yield: 26%).

1H-NMR ($CDCl_3$, 600 MHz) analysis of Additive II: 7.35-7.29 (t, 12H), 7.22-7.21 (m, 18H), 4.22-4.18 (q, 6H), 2.90-2.87 (t, 6H)

[Formula 2-2]

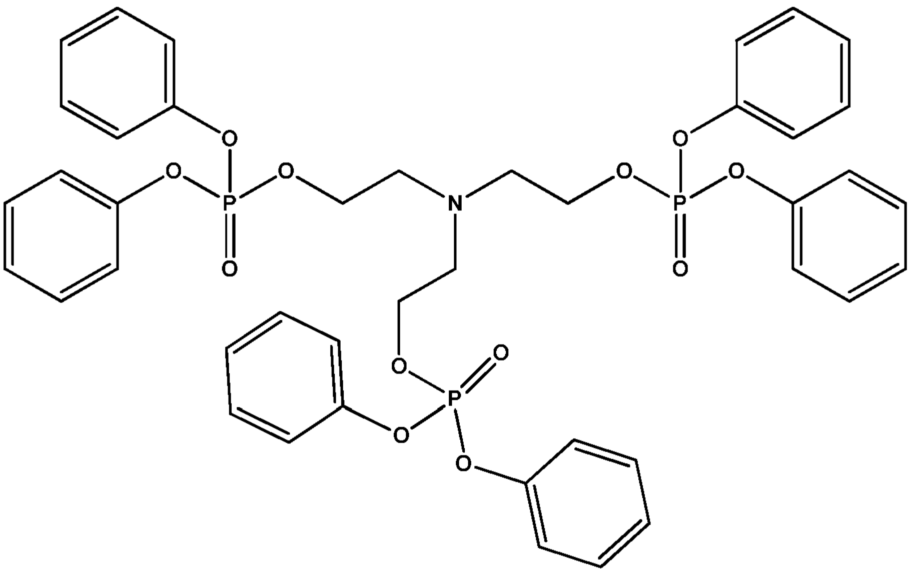

(Nitrilotris(ethane-2,1-diyl)hexaphenyl tris(phosphate))

**(3) Preparation of Additive III ((2,2-bis(((diphenoxyphosphoryl)oxy)methyl)propane-1,3-diyl tetraphenyl bis(phosphate)))**

Tetrahydrofuran (800 mL), pentaerythritol (8.0 g, 58.8 mmol), triethylamine (29.7 g, 246.8 mmol), and 4-dimethylaminopyridine (1.4 g, 11.8 mmol) were sequentially input into a round bottom flask, and then cooled to 0°C. Diphenylphosphoryl chloride (66.3 g, 246.8 mmol) was slowly added to the mixture solution for 0.5 h, and then the temperature was increased to 60°C, followed by additionally stirring the mixture for 7 h.

After completion of the reaction, 500 mL of water was slowly added dropwise to the stirred solution, an organic

layer was separated and washed three times with 200 mL of water, then the solvent was dried and purified through a silica column to obtain 27.0 g of Additive III having a structure represented by Formula 2-3 below (yield: 43%).

1H-NMR ($CDCl_3$, 600 MHz) analysis of Additive III: 7.30-7.29 (d, 16H), 6.99-6.96 (t, 16H), 6.80-6.77 (t, 8H), 4.23-4.22 (d, 8H)

[Formula 2-3]

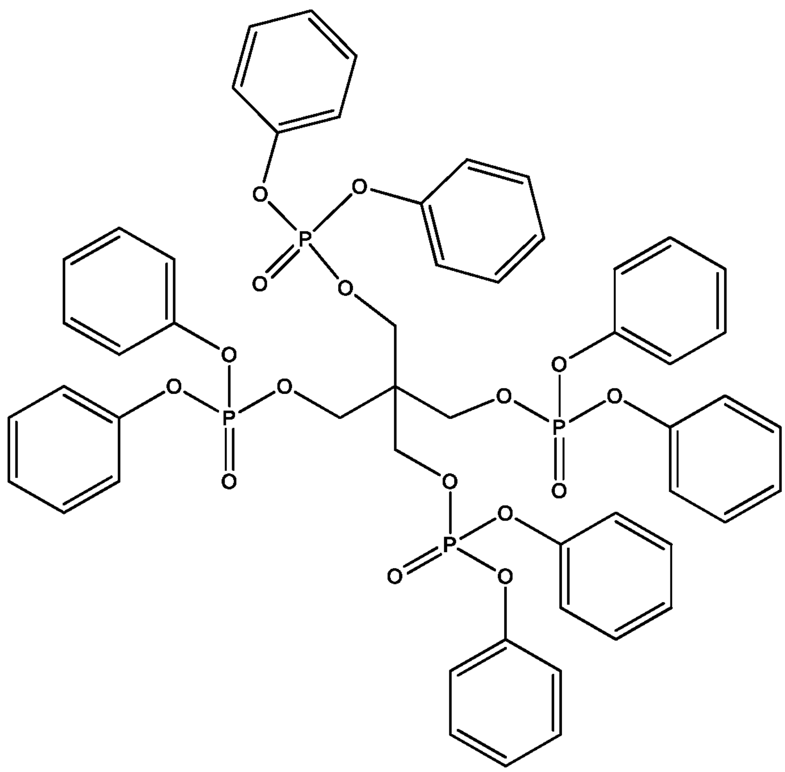

(2,2-bis(((diphenoxyphosphoryl)oxy)methyl)propane-1,3-diyltetraphenyl bis(phosphate))

**<Examples and Comparative Examples>**

**Example 1**

**(1) Preparation of electrolyte**

A 1M $LiPF_6$ solution (a mixed solvent of EC/EMC in a volume ratio of 30:70) was prepared.

An electrolyte was prepared by inputting 1 wt% of fluoroethylene carbonate (FEC), 0.5 wt% of 1,3-propene sultone (PRS), and 0.5 wt% of 1,3-propane sultone (PS) based on the total weight of the electrolyte (100 wt%) into the $LiPF_6$ solution, and adding 5 wt% of Additive I (oxybis(ethane-2,1-diyl)tetraphenyl bis(phosphate)) according to the synthesis example thereto.

**(2) Manufacture of lithium secondary battery sample**

A cathode slurry was prepared by mixing a cathode active material in which $Li[Ni_{0.6}Co_{0.2}Mn_{0.2}]O_2$ and $Li[Ni_{0.8}Co_{0.1}Mn_{0.1}]O_2$ were mixed in a weight ratio of 6:4, carbon black as a conductive material, and polyvinylidene fluoride (PVdF) as a binder in a weight ratio of 92:5:3, and dispersing in NMP.

The cathode slurry was uniformly applied to a region of an aluminum foil (thickness: 15 μm) having a protrusion part (cathode tab) on one side except for the protrusion part, followed by drying and pressing the same to prepare a cathode.

An anode slurry was prepared by mixing an anode active material in which artificial graphite and natural graphite were mixed in a weight ratio of 7:3, styrene-butadiene rubber (SBR) as a binder, and carboxymethyl cellulose (CMC) as a thickener in a weight ratio of 97:1:2 in distilled water.

The anode slurry was uniformly applied to a copper foil (thickness: 15 μm) having a protrusion part (anode tab) on one side, except for the protrusion part, followed by drying and pressing the same to prepare an anode.

An electrode assembly was formed by interposing a polyethylene separation membrane (thickness: 20 μm) between the cathode and the anode. Next, a cathode lead and an anode lead were welded and connected to the cathode tab and the anode tab, respectively.

The electrode assembly was housed in a pouch (case) so that some regions of the cathode lead and the anode lead were exposed to an outside of the pouch, followed by sealing three sides of the pouch except for a side of an electrolyte injection part.

After injecting the electrolyte prepared in the above (1) and sealing the side of the electrolyte injection part, a lithium secondary battery was manufactured by impregnation for 12 hours.

## Example 2

An electrolyte and a lithium secondary battery sample were manufactured in the same manner as in Example 1, except that 5 wt% of Additive II (nitrilotris(ethane-2,1-diyl)hexaphenyl tris(phosphate)) according to the synthesis example was used instead of Additive I.

## Example 3

An electrolyte and a lithium secondary battery sample were manufactured in the same manner as in Example 1, except that 5 wt% of Additive III (2,2-bis(((diphenoxyphosphoryl)oxy)methyl)propane-1,3-diyl tetraphenyl bis(phosphate)) according to the synthesis example was used instead of Additive I.

## Example 4

An electrolyte and a lithium secondary battery sample were manufactured in the same manner as in Example 1, except that Additive I was used in a content of 1 wt% instead of 5 wt%.

## Example 5

An electrolyte and a lithium secondary battery sample were manufactured in the same manner as in Example 1, except that Additive I was used in a content of 10 wt% instead of 5 wt%.

## Example 6

An electrolyte and a lithium secondary battery sample were manufactured in the same manner as in Example 2, except that Additive II was used in a content of 1 wt% instead of 5 wt%.

## Example 7

An electrolyte and a lithium secondary battery sample were manufactured in the same manner as in Example 2, except that Additive II was used in a content of 10 wt% instead of 5 wt%.

## Example 8

An electrolyte and a lithium secondary battery sample were manufactured in the same manner as in Example 3, except that Additive III was used in a content of 1 wt% instead of 5 wt%.

## Example 9

An electrolyte and a lithium secondary battery sample were manufactured in the same manner as in Example 3, except that Additive III was used in a content of 10 wt% instead of 5 wt%.

## Comparative Example 1

An electrolyte and a lithium secondary battery sample were manufactured in the same manner as in Example 1, except that Additive I was not used.

The electrolyte compositions of the examples and comparative examples are described in Table 1 below.

[TABLE 1]

| | Additive (wt%) | Auxiliary additive (wt%) | | | Content ratio of auxiliary additive to additive |
|---|---|---|---|---|---|
| | | FEC | PRS | PS | |
| Example 1 | Additive I (5) | 1 | 0.5 | 0.5 | 1:0.4 |
| Example 2 | Additive II (5) | 1 | 0.5 | 0.5 | 1:0.4 |
| Example 3 | Additive III (5) | 1 | 0.5 | 0.5 | 1:0.4 |
| Example 4 | Additive I (1) | 1 | 0.5 | 0.5 | 1:2 |
| Example 5 | Additive I (10) | 1 | 0.5 | 0.5 | 1:0.2 |
| Example 6 | Additive II (1) | 1 | 0.5 | 0.5 | 1:2 |
| Example 7 | Additive II (10) | 1 | 0.5 | 0.5 | 1:0.2 |
| Example 8 | Additive III (1) | 1 | 0.5 | 0.5 | 1:2 |
| Example 9 | Additive III (10) | 1 | 0.5 | 0.5 | 1:0.2 |
| Comparative Example 1 | - | 1 | 0.5 | 0.5 | - |

**<Experimental Example>**

**(1) Measurement of heat exposure (Hot box test)**

The lithium secondary batteries of the examples 1 to 3 and comparative example 1 were put into an oven, and the temperature thereof was increased at a rate of 5°C/min to reach 150°C. Then, a time (delay time) required for the cell to explode during maintaining the increased temperature for 3 hours was measured.

**(2) Evaluation of initial characteristics**

**2-1) Evaluation of initial capacity**

The lithium secondary batteries of the examples and comparative examples were charged with 0.5C-rate CC/CV (4.2 V, 0.05C cut-off) at 25°C, and were discharged with 0.5C-rate CC (2.7 V cut-off) three times, then the discharge capacities were measured, and the measured discharge capacities were set as C1.

**2-2) Evaluation of direct current internal resistance (DCIR)**

For each of the lithium secondary batteries of the examples and comparative examples, at 60% point of state-of-charge (SOC), when sequentially increasing or decreasing the C-rate to 0.2C, 0.5C, 1.0C, 1.5C, 2.0C, 2.5C and 3.0C, and performing charging and discharging at each of C-rates for 10 seconds, terminal points of the voltage were composed with an equation of a straight line and a slope thereof was adopted as the DCIR, and the obtained DCIR was set as R1.

**(3) Evaluation of lifespan performance (45°C)**

**3-1) Evaluation of capacity retention rate**

The lithium secondary batteries of the examples and comparative examples were charged with 1C to 4.2 V at 45°C and discharged with 1C to 2.75 V, and the charging and discharging were repeated 600 times, then the discharge capacities C2 at 600th cycle were measured.
The capacity retention rate was calculated according to the following equation.

$$\text{Capacity retention rate (\%)} = (C2/C1) \times 100$$

**3-2) Evaluation of resistance increase rate**

The secondary batteries of the examples and comparative examples were charged with 0.5C to 4.2 V, and left in a

chamber at 45°C for 4 hours, then the DCIRs were measured in the same manner as in 2-2) above, and the measured DCIRs were set as R2.

The DCIR increase rate was calculated according to the following equation.

$$\text{DCIR increase rate (\%)} = \{(R2-R1)/R1 + 1\} \times 100(\%)$$

**(4) Evaluation of high-temperature storage characteristics (60°C)**

**4-1) Evaluation of capacity retention rate after high temperature storage**

The lithium secondary batteries of the examples and comparative examples were charged with 0.5C to 4.2 V at 25°C, and left at a high temperature (60°C) for 13 weeks. After high temperature storage, the lithium secondary batteries were discharged with 0.5 C-rate CC (2.7 V cut-off), then the discharge capacities C3 were measured.

The capacity retention rate after high temperature storage was calculated according to the following equation.

$$\text{Capacity retention rate (\%)} = (C3/C1) \times 100$$

**4-2) Evaluation of resistance increase rate after high temperature storage**

The secondary batteries of the examples and comparative examples were charged with 0.5C to 4.2 V at 25°C and left at a high temperature (60°C) for 13 weeks. For the lithium secondary batteries after high temperature storage, the DCIRs were measured in the same manner as in 2-2) above, and the measured DCIRs were set as R3.

The DCIR increase rate after high temperature storage was calculated according to the following equation.

$$\text{DCIR increase rate (\%)} = \{(R3-R1)/R1 + 1\} \times 100(\%)$$

**4-3) Evaluation of thickness increase rate after high temperature storage**

The secondary batteries of the examples and comparative examples were charged with 0.5C to 4.2 V at 25°C, and initial thicknesses T1 of the batteries were measured using a plate thickness measuring device (Mitutoyo, 543-490B).

Thereafter, the secondary batteries of the examples and comparative examples were left at a high temperature (60°C) for 13 weeks, and thicknesses T2 of the batteries were measured using the plate thickness measuring device (Mitutoyo, 543-490B).

The battery thickness increase rate after high temperature storage was calculated according to the following equation.

$$\text{Battery thickness increase rate (\%)} = \{(T2-T1)/T1 + 1\} \times 100(\%)$$

**[TABLE 2]**

| | | Example 1 | Example 2 | Example 3 | Comparativ e Example 1 |
|---|---|---|---|---|---|
| Heat Ex-posure as-sessme nt | Ignition temperature (°C) | 154 | 156 | 158 | 150 |
| | Delay time (min) | 1.0 | 1.2 | 0.9 | 0 |
| Initial character istics | Capacity (mAh) | 1834 | 1660 | 1863 | 1879 |
| | DCIR (mΩ) | 39 | 41 | 40 | 38 |
| Performa nce at 45°C 1) | Capacity retention rate (%) | 91 | 82 | 89 | 86 |
| | DCIR increase rate (%) | 106 | 122 | 105 | 110 |

(continued)

| | | Example 1 | Example 2 | Example 3 | Comparativ e Example 1 |
|---|---|---|---|---|---|
| Storage at 60°C2) | Capacity retention rate (%) | 86 | 82 | 86 | 84 |
| | DCIR increase rate (%) | 121 | 156 | 127 | 147 |
| | Thickness increase rate (%) | 149 | 115 | 128 | 158 |
| 1)Performance at 45°C: Performances at 600th cycle<br>2)Storage at 60°C: Characteristics after storage at 60°C for 13 weeks upon charging to SOC 100% | | | | | |

**[TABLE 3]**

| | | Exampl e 4 | Exampl e 5 | Exampl e 6 | Exampl e 7 | Exampl e 8 | Exampl e 9 | Compar ative Exampl e 1 |
|---|---|---|---|---|---|---|---|---|
| Initial charact eristics | Capacity (mAh) | 1875 | 1724 | 1780 | 1545 | 1882 | 1699 | 1879 |
| | DCIR (mΩ) | 35 | 43 | 39 | 44 | 37 | 42 | 38 |
| Perfor mance at 45°C 1) | Capacity retention rate (%) | 87 | 84 | 88 | 81 | 93 | 85 | 86 |
| | DCIR increase rate (%) | 110 | 113 | 109 | 126 | 101 | 111 | 110 |
| Storage at 60°C 2) | Capacity retention rate (%) | 95 | 83 | 92 | 82 | 91 | 84 | 84 |
| | DCIR increase rate (%) | 113 | 136 | 122 | 161 | 114 | 131 | 147 |
| | Thicknes s increase rate (%) | 156 | 128 | 124 | 119 | 134 | 127 | 158 |
| 1)Performance at 45°C: Performances at 600th cycle<br>2)Storage at 60°C: Characteristics after storage at 60°C for 13 weeks upon charging to SOC 100% | | | | | | | | |

Referring to Tables 2 and 3 above, the lithium secondary batteries of the examples had improved flame retardant characteristics, performances at 45°C and high-temperature (60°C) storage characteristics (effect of suppressing thickness increase, effect of suppressing resistance increase, and increase in capacity retention rate) compared to the secondary battery of Comparative Example 1.

On the other hand, in the case of the lithium secondary battery of Comparative Example 1, which did not use additives including the compound having a specific structure, the initial capacity was high and the initial resistance was low, but in the performances measured at 45°C and after high temperature (60°C) storage, the capacity retention rate was deteriorated and the resistance was further increased. In addition, in the case of the lithium secondary battery of Comparative Example 1, the thickness after high temperature (60°C) storage was further increased.

The contents described above are merely an example of applying the principle of the present disclosure, and other configurations may be further included without departing from the scope of the present disclosure.

## Claims

**1.** An electrolyte for a lithium secondary battery comprising:

an additive which comprises a compound having a structure represented by Formula 1 below;

an organic solvent; and
a lithium salt:

[Formula 1]

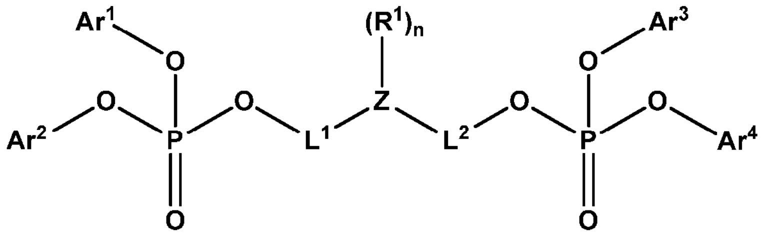

(in Formula 1, $R^1$ is

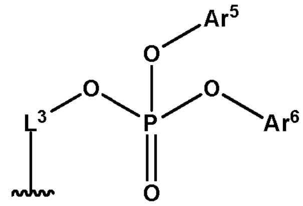

,

$Ar^1$ to $Ar^6$ are each independently a $C_6$ to $C_{18}$ aryl group, a $C_7$ to $C_{19}$ alkylaryl group or a $C_6$ to $C_{18}$ haloaryl group, $L^1$ to $L^3$ are each independently a $C_1$ to $C_{12}$ alkylene group, a $C_3$ to $C_{12}$ cycloalkylene group, a $C_6$ to $C_{12}$ arylene group or a $C_3$ to $C_{12}$ heteroarylene group,
when Z is oxygen, n is 0, when Z is nitrogen, n is 1, and when Z is carbon, n is 2).

2. The electrolyte for a lithium secondary battery according to claim 1, wherein $Ar^1$ to $Ar^6$ are each independently a $C_6$ to $C_{12}$ aryl group, a $C_7$ to $C_{13}$ alkylaryl group or a $C_6$ to $C_{12}$ haloaryl group, and $L^1$ to $L^3$ are each independently a $C_1$ to $C_{12}$ alkylene group.

3. The electrolyte for a lithium secondary battery according to claims 1 or 2, wherein $Ar^1$ to $Ar^6$ are a phenyl group, and $L^1$ to $L^3$ are each independently a $C_1$ to $C_5$ alkylene group.

4. The electrolyte for a lithium secondary battery according to one of claims 1 to 3, wherein the compound having a structure represented by Formula 1 above comprises compounds having structures represented Formulas 2-1 to 2-3 below:

[Formula 2-1]

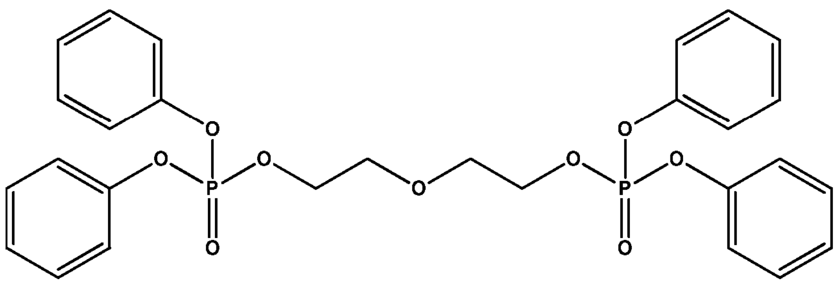

[Formula 2-2]

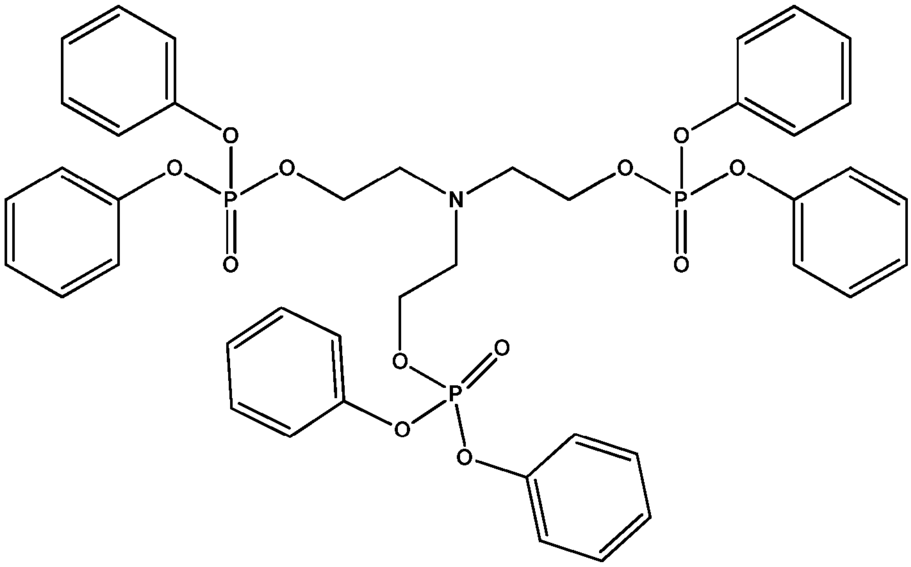

[Formula 2-3]

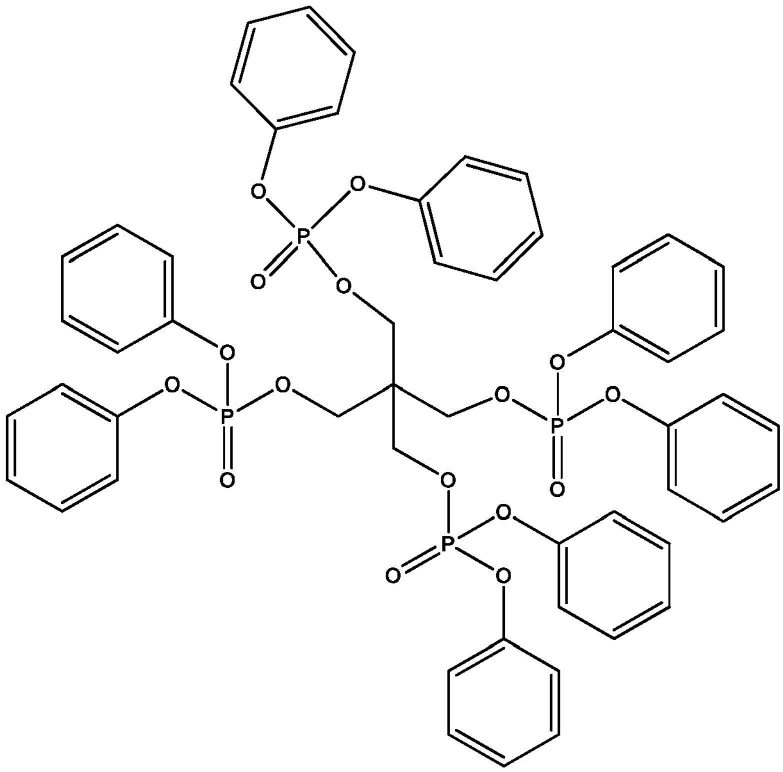

5. The electrolyte for a lithium secondary battery according to one of claims 1 to 4, wherein the organic solvent comprises at least one selected from the group consisting of a carbonate organic solvent, an ester organic solvent, an ether organic solvent, a ketone organic solvent and an aprotic organic solvent.

6. The electrolyte for a lithium secondary battery according to one of claims 1 to 5, wherein the organic solvent comprises a cyclic carbonate solvent and a linear carbonate solvent.

**7.** The electrolyte for a lithium secondary battery according to claim 6, wherein a ratio of a volume of the cyclic carbonate solvent to a volume of the linear carbonate solvent in the organic solvent is 1/9 to 1.

**8.** The electrolyte for a lithium secondary battery according to one of claims 1 to 7, wherein a content of the additive is 0.1% by weight to 10% by weight based on a total weight of the electrolyte.

**9.** The electrolyte for a lithium secondary battery according to one of claims 1 to 8, wherein the electrolyte further comprises at least one auxiliary additive selected from the group consisting of a fluorine-containing carbonate compound, a lithium phosphate compound, a sultone compound and a sulfate compound.

**10.** The electrolyte for a lithium secondary battery according to claim 9, wherein a content of the auxiliary additive is 0.01% by weight to 10% by weight based on the total weight of the electrolyte.

**11.** The electrolyte for a lithium secondary battery according to claims 9 or 10, wherein a weight ratio of the content of the auxiliary additive to the content of the additive in the electrolyte is 0.1 to 5.

**12.** The electrolyte for a lithium secondary battery according to one of claims 9 to 11, wherein

the fluorine-containing carbonate compound comprises fluoroethylene carbonate,
the lithium phosphate compound comprises lithium difluoro phosphate,
the sultone compound comprises at least one selected from the group consisting of 1,3-propane sultone, 1,4-butane sultone, ethene sultone, 1,3-propene sultone, 1,4-butene sultone and 1-methyl-1,3-propene sultone, and
the sulfate compound comprises at least one selected from the group consisting of ethylene sulfate, trimethylene sulfate and methyltrimethylene sulfate.

**13.** A lithium secondary battery comprising:

a cathode;
an anode disposed to face the cathode; and
the electrolyte for a lithium secondary battery according to one of claims 1 to 12, in which the cathode and the anode are impregnated.

[FIG. 1]

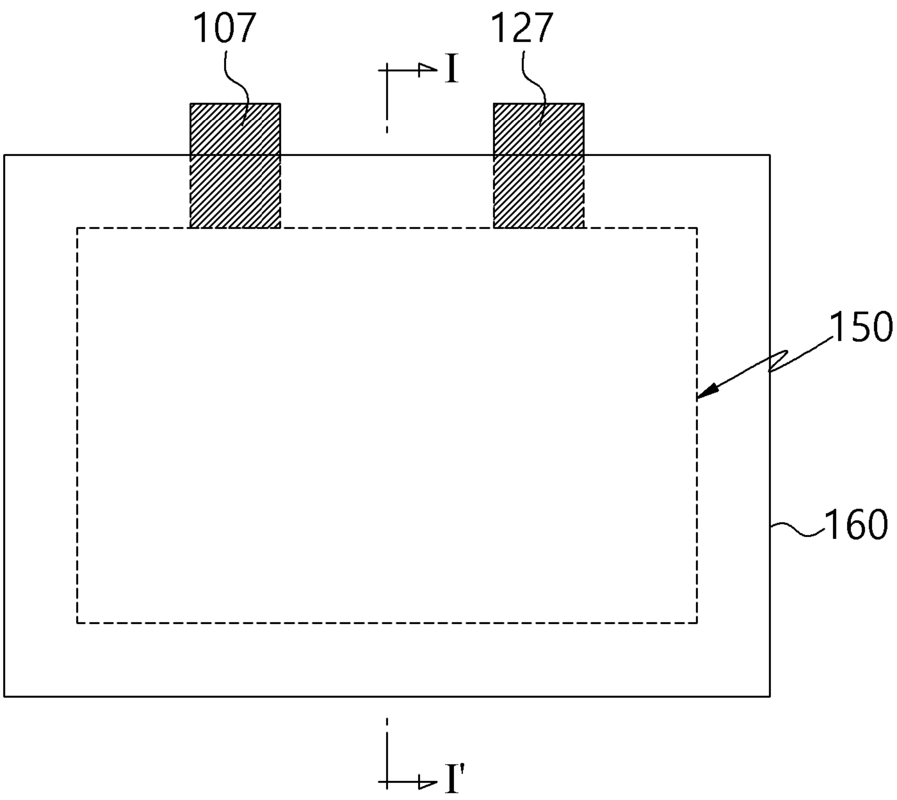


[FIG. 2]

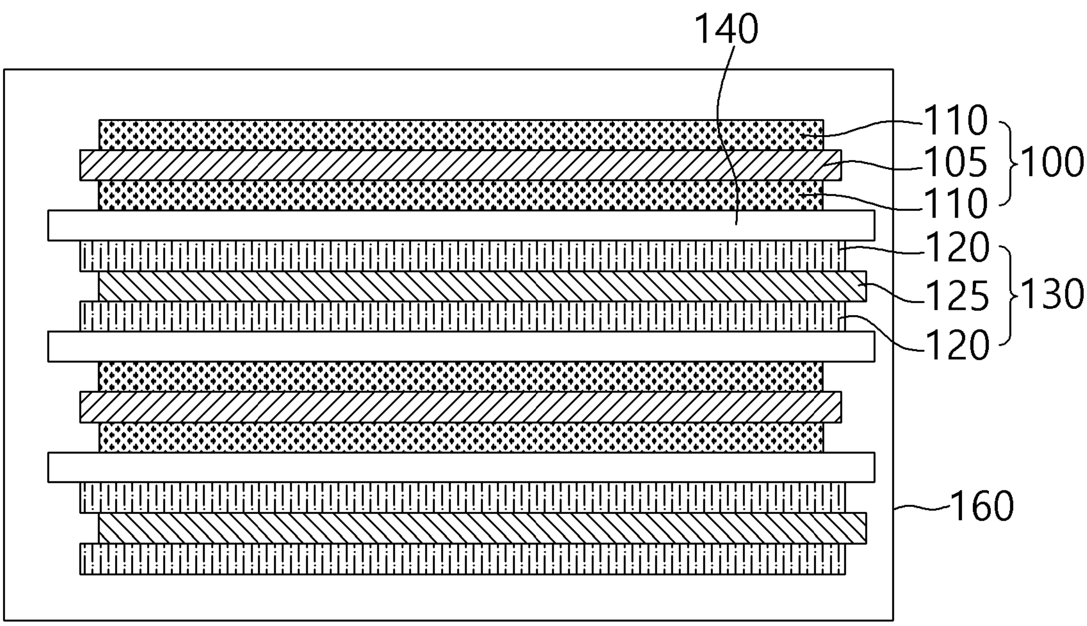

Europäisches Patentamt
European Patent Office
Office européen des brevets

# EUROPEAN SEARCH REPORT

Application Number
EP 25 15 9959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 207 464 A (SK ENERGY CO LTD) 18 October 2022 (2022-10-18) * Claim 1 * ----- | 1-13 | INV. H01M10/0525 H01M10/0567 H01M10/0569 |
| A | WU XINHU ET AL: "Tribological Properties of Alkylphenyl Diphosphates as High-Performance Antiwear Additive in Lithium Complex Grease and Polyurea Grease for Steel/Steel Contacts at Elevated Temperature", INDUSTRIAL & ENGINEERING CHEMISTRY RESEARCH, vol. 53, no. 14, 26 March 2014 (2014-03-26), pages 5660-5667, XP093291003, ISSN: 0888-5885, DOI: 10.1021/ie500105v * Page 5660,abstract; right-hand column, second paragraph * ----- | 1-13 | |
| A | JP 2004 107768 A (CITIZEN WATCH CO LTD) 8 April 2004 (2004-04-08) * par. 36-38 * ----- | 1-13 | TECHNICAL FIELDS SEARCHED (IPC) |
| A,P | LUO FUBIN ET AL: "Catalyst-free sustainable epoxy vitrimers with fire safety offered by phosphorus-containing compounds", POLYMER DEGRADATION AND STABILITY, vol. 230, 1 December 2024 (2024-12-01), page 111042, XP093291016, GB ISSN: 0141-3910, DOI: 10.1016/j.polymdegradstab.2024.111042 * Abstract; page 3, figure 1(a) * ----- | 1-13 | H01M |

1 The present search report has been drawn up for all claims

| Place of search | Date of completion of the search | Examiner |
|---|---|---|
| Munich | 30 June 2025 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 9959

This annex lists the patent family members relating to the patent documents cited in the above-mentioned European search report. The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| CN 115207464 A | 18-10-2022 | CN 115207464 A | 18-10-2022 |
| | | EP 4075560 A1 | 19-10-2022 |
| | | KR 20220141615 A | 20-10-2022 |
| | | US 2022328876 A1 | 13-10-2022 |
| JP 2004107768 A | 08-04-2004 | NONE | |

EPO FORM P0459

For more details about this annex : see Official Journal of the European Patent Office, No. 12/82